# EUROPEAN PATENT APPLICATION

(11) **EP 1 589 460 A1**
(43) Date of publication of application: **26.10.2005**
(21) Application number: 05252534.2
(22) Date of filing: 22.04.2005
(51) Int. Cl.: G06F 17/60

(54) **An improved system for stock images peer-to-peer services over the world wide web**

(30) Priority: 22.04.2004 US 564216 P
(71) Applicant: Creo IL. Ltd., Herzlia 46103 (IL)
(72) Inventor: Shay, Lipowitz, Givatayim 53327 (IL); Weisman, Hanan, Ra'anana (IL)
(74) Representative: White, Duncan Rohan

(57) **Abstract**

A method and system for distributed digital content trading over the Internet. The system comprises image publishers (110M), an image repository (19), a publishing module (180) and a first image enhancement module (190B); and a system service center (100M), an image attributes database (160), a search module, a second image enhancement module (190A), a billing module (170) and a coordination and control module (150). Image publishers (110M), publish in the service's web-site thumbnails representing images. An image buyer, browsing and searching the service web site for images, selects those thumbnails meeting her/his requirements, and gets from the service a temporary direct communication link to the image repository (19) of the image publisher. The buyer has the option to remotely review, enhance and embed in a page layout the low-resolution representation of the selected thumbnails, and quality check parts of the high-resolution images including generic and precise simulations. When satisfied, the buyer gets into a price and payment negotiation with the publisher, and pays via the service's billing module (170). The image buyer acquires, by Internet, CD or transparency, the high-resolution image file directly from the supplier's repository (19), whereas the high-resolution files were automatically rendered by the enhancement unit ready for print, following the parameters set previously by the image buyer.

## Description

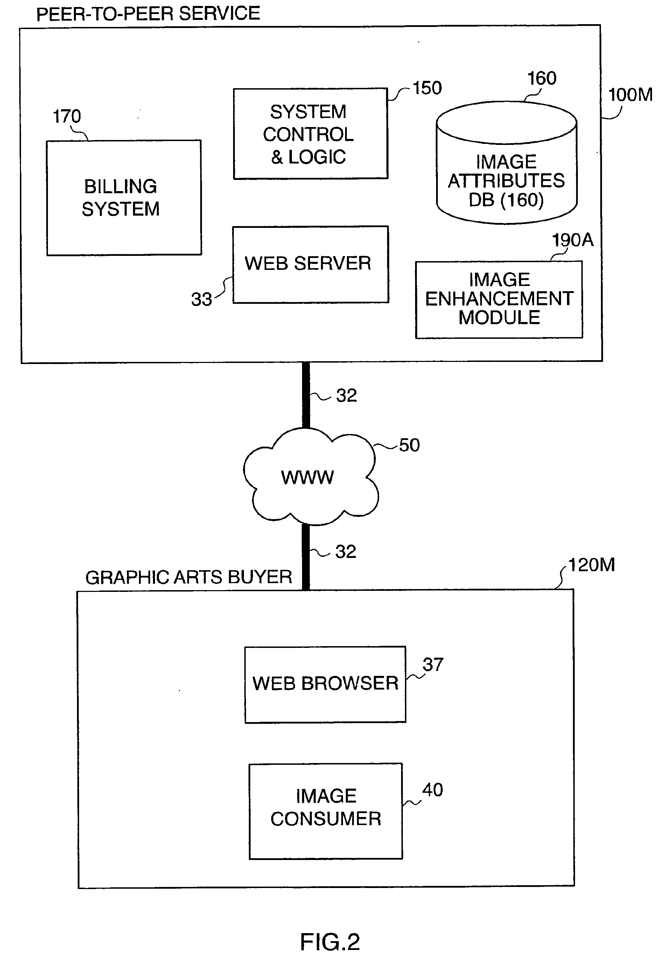

WO2004/046982 published 3 June 2003 discloses a distributed image bank, where Image Publishers (content providers) provide full size images (content) to Graphic Arts Buyers via an indexing system of the Peer-to-Peer Service.
The present invention is an improved system and method of operation for stock images Peer-to-Peer services, as described hereinafter with reference to figures 2 to 6 of the accompanying drawings.

One of the innovative features in WO2004/046982 is the ability of the Image Buyers to view an image in the same colors it would later be printed, provided the viewer's monitor is well calibrated for soft proofing. This feature is practically an Output Simulation function.

It was further indicated in WO2004/046982 that a software module titled Image Enhancing Module is required (at the Image Buyer's computer) to perform the Output Simulation. Since the Image Buyer is using a web browser to perform the complete process of searching, purchasing and downloading an image, adding a special module just for the sake of viewing an image, is cumbersome and might discourage users to adopt such a system.

The first embodiment described in this improved invention is a method to perform a complete Output Simulation without adding any additional software packages to the Image Buyer.

The second embodiment defines a subset of the Peer-to-Peer Service. Each Image Publisher can choose to become an Exclusive Content Provider, within the Peer-to-Peer Service, to a predefined group of Image Buyers.

### GLOSSARY

The following terms are defined in the web site http://www.webopedia.com/ :
Color Matching - The process of assuring that a color on one medium remains the same when converted to another medium. This is extremely difficult because different media use different color models. Color monitors, for example, use the RGB model, whereas process printing uses the CMYK model.
Metadata - Data about data. Metadata describes how and when and by whom a particular set of data was collected, and how the data is formatted.
IP Address - An identifier for a computer or device on a TCP/IP network.
Web-server - A computer that delivers (serves up) Web pages. Every Web server has a fixed IP address and possibly a domain name.
Peer-to-Peer network - A type of network in which each workstation has equivalent capabilities and responsibilities. In particular, each workstation has a temporary IP address through which it communicates.

The following terms were taken from:
http://graphicssoft.about.com/library/glossary/bldefresolution.htm :
Thumbnail (or Icon) - a "Thumbnail " is a small graphic image that is usually used as a link to either a larger version of that image or to another web site. The image used for the Thumbnail needs to be reduced and resized to a smaller graphic for a quicker download of your web page. The viewer then has the option to click on the Thumbnail if they want to see the larger picture, which will take longer to download, or if they want to visit another site that it is linked to.
Resolution - resolution is a measurement of the output quality of an image, usually in terms of samples, pixels, dots, or lines per inch. The terminology varies according to the intended output device. PPI (pixels per inch) refers to screen resolution, DPI (dots per inch) refers to print resolution, SPI (samples per inch) refers to scanning resolution, and LPI (lines per inch) refers to halftone resolution.
Often images are referred to as high-resolution (hi-res) or low-resolution (low-res). High-resolution refers to an image intended for print, generally having 300 samples per inch or more. Low-resolution refers to images only intended for screen display, generally having 100 pixels per inch or less.

We have broadened the above definition:
Low-res Image - is a graphic image that is scaled down for various purposes; preview in an imaging application, hi-res representation for page layout applications or hi-res representation for web usages. It has 2 main forms:
   1. An image scaled down to a fixed resolution, typically 72 or 144 dpi
   2. An image scaled down to a specific screen size typically 600 X 800 or 768 X 1024.
Hi-res Image - a graphic image in a digital form that contains all the necessary data for its final use; appropriate resolution, color depth and input profile (color model), i.e. if additional transformations are required in order to convert the image to its final output form, then all necessary input for these transformation is stored within the image.

The following terms are defined for the purpose of this application:
Link - at least two entities (for example site A and site B) connected (communication wise) by the Internet or other communication link.
Action ― an operation (e.g. searching data, transferring data, purchasing goods, paying for merchandise) executed via a link. Actions will be symbolized in the figures by numbers next to the specific link,
Entity - an entity (for example: Image Bank) includes one or more operational units (for example: a PC, storage device). The interconnections and mode of operation of the entity are known in the art.
Peer to Peer Link - An Internet or other communication link connection between two or more Peers. Note also: Peer-to-Peer network.
Color transformation - Transforming a color image from one color space (of one device) to another color space (of another device).
ICC - The "International Color Consortium" was established in 1993 by eight industry vendors for the purpose of creating, promoting and encouraging the standardization and evolution of an open, vendor-neutral, cross-platform color management system architecture and components.
ICC Profile - Is a color characteristic file, which has information necessary to convert color data between native device color spaces and device independent color spaces.
Input Profile - An ICC profile representing input devices such as scanners and digital cameras.
Output Profile - An ICC profile representing output devices such as printers.
Display Profile - An ICC profile representing display devices such as monitors.
SWOP - "Specifications for Web Offset Publications" Established by the SWOP Committee, a group whose aim is to make consistent the reproduction of advertising materials inserted in a variety of roll-printed publications.
Color Space - An n-dimensional space or model into which the n attributes of a color can be represented, plotted or recorded.
RGB Color Space - A three-dimensional native device color space with the attributes of Red, Green & Blue.
RGB Working space - is a RGB color space, which is defined by an ICC device dependent profile, usually Display Profile. However, it does not represent any specific device. This color space is convenient and useful in representing images (also untagged images) while they are displayed and edited by human operators.
CMYK Color Space - A four-dimensional native device color space with the attributes of Cyan, Magenta, Yellow, Key (black).
PCS -"profile connection space" - An abstract color space used to connect the source and destination ICC profiles.
CIE-Lab Color Space - A three-dimensional device independent color space. The L-value represent the lightness/darkness value, the a-value represents the red-green attribute value and the b-value represent the yellow-blue attribute value. CIE-Lab is normally used as a PCS.
Soft proof - The process of using the computer monitor to accurately simulate what the image will look like when printed; proofing on screen, rather than with a hard-copy contract proof.
Output Simulation - is a feature in color management software that allows you to accurately simulate on a monitor display what you will get on the printed page (soft proofing).
Internet Protocol (IP) - pronounced as two separate letters. IP specifies the format of packets (also called datagrams), and the addressing scheme. Most networks combine IP with a higher-level protocol called Transmission Control Protocol (TCP), which establishes a virtual connection between a destination and a source. IP by itself is something like the postal system. It allows you to address a package and drop it in the system, but there's no direct link between you and the recipient. TCP/IP, on the other hand, establishes a connection between two hosts so that they can send messages back and forth for a period of time.
Secure Sockets Layer (SSL) - A protocol developed by Netscape for transmitting private documents via the Internet. SSL works by using a private key to encrypt data that's transferred over the SSL connection. Both Netscape Navigator and Internet Explorer support SSL, and many Web sites use the protocol to obtain confidential user information, such as credit card numbers. By convention, URLs that require an SSL connection start with https: instead of http:
Web Services - A "service" is a network-enabled component. Like components, services in general (and Web Services in particular) represent a functionality that can be easily reused without knowing the details of how the service is implemented. Since Web protocols are completely independent across vendor, platform, and language implementations, the result is an application that integrates well with the rest of the enterprise while being flexible enough to modify, as business needs change.
Application Program Interface (API) - A set of routines, protocols, and tools for building software applications.

Digital stock images are widely used over the Internet. A common use of these images in the Graphics Arts industry is described below:
Designers, who design a page, look for a specific image to be inserted in that page layout. This image can be specially originated for this occasion or can be searched for in repositories for stock images. These repositories, often called Image Banks, are widely used over the World Wide Web, for example, Getty Images of Seattle, Washington. The designer who looks for an image in an Image Bank can view a small representation of the image. If the designer is pleased with this image, he or she negotiates with the Image Bank the price of the full-resolution image. The price depends at least on two factors: the image attributes (how rare, how artistic, whether a celebrity, etc.) and the use of the image in the print (size, media type, media circulation, etc.).

The Image Bank service poses several problems:
- In most cases the stock images for use, reside within an Image Bank. Each image requires a large storage capacity, for example: a printed A4 color image in 300 dpi resolution requires about 35 Megabytes of storage. Therefore, such a bank needs to allocate many resources in order to store all these images (hardware, disk space, bandwidth). Thus, the price of the stock images for the consumers must be increased.
- Stock images are captured or digitized into the RGB color space and are transferred in this format to the users, but images are normally printed after conversion to the CMYK color space, (that is, the preparation for print is performed after the transaction was done). In many cases, the color match between the original image and the printed image is very poor.
- Since the mediators (Image Banks) take a significant commission, the image originators get a small portion of the revenue for each image. Moreover, in many cases they do not get the publicity they may have gotten if they sold the images directly

Presently, most of the stock image trading is performed via Image Banks. An Image Bank purchases the original media of an image, e.g. film, from an Image Supplier. The Image Bank then scans the film in-house, stores it in an Image Repository, and posts its low-resolution representation on the Image Bank's web server which is located on the Internet. Once an Image Consumer is interested in stock images, he or she performs a search in the Image Bank's web site. Upon location of an appropriate (low-resolution) image, the Image Consumer initiates a purchasing transaction of the high-resolution image. The Image Bank's Management Unit concludes a transaction and up loads the image from the Image Repository, and transfers it via the Internet to the Image Consumer.

The main problems with this model are: the Image Consumer pays more than necessary; the Image Supplier does not get her/his fair share in the transaction; the images are not ready for print, and finally the images selected from the web-site are not in full-resolution and therefore the Image Consumer cannot evaluate the image quality before the transaction.

There are other means of stock image trading that are in use. For example, tools that enable the Image Supplier to publish her/his images directly on the Web.
The following is a typical workflow of this model: the Image Supplier (e.g. the Impressionist or Modem Art section of a museum), puts its images on the Image Repository of the Stock Image Publisher (e.g. the museum) and then publishes them on the museum's web server and the internet, using an Image Publishing Software tool, for example, FotoWeb by FotoWare of Norway. Once an Image Consumer is interested in a (e.g. art) stock image, she/he performs a search on the Internet, using any standard search engine, e.g. Google. The Stock Images Publisher, is found in this search and the Image Consumer can perform a particular search, negotiate price and retrieve a specific image from the Stock Images Publisher via the Web. The main drawbacks of this model are: the Image Consumer needs to perform a double search, first a search for one or more Stock Image Publishers, and a second search for the specific image within the Stock Image Publisher's website. The Stock Image Publisher has a relatively small repository of images and thus the consumer has fewer images to choose from.

The object of this invention is to provide an improved system and method for trading of digital content, particularly graphic arts images, between image publishers, image buyers and a control and coordination service, all communicating via the Internet or other communication means.

According to one aspect of the invention, there is provided a distributed trading system comprising of image publishers, each having a repository for high-resolution images and an image publishing module, image buyers, a system service unit having an image attributes database, a search module, a billing module and a coordination and control unit and an image enhancement unit. The image publishers, image buyers, enhancement unit and the service unit communicate preferably via the Internet or by means of other communication methods, including physical transfer of films and CD's.

In a preferred embodiments of the invention described below, the image publishing module comprises of an image metadata publishing module, an image high-resolution exporting module, a first module of the image enhancement unit and an image price negotiating module, each including further functional units serving the purpose of the system. This image publishing module is downloaded from the service unit to the image publisher upon the first registration of images by the publisher in the service. A second module of the image enhancement unit is part of the service unit.

In the preferred embodiment of the invention described below the image enhancement unit includes tools for exporting low-resolution and high-resolution images, in partial or full format, from the image publisher repository; tools for evaluating, enhancing, quality checking, simulating and performing selected layout functions. These tools are functional for assisting the image buyer to conclude the purchase of a specific high-resolution image, initially presented by the service unit as a thumbnail.

In an alternative embodiment the system service unit includes also an image repository, enabling a different method of operation.

In another alternative embodiment of the invention the enhancement unit is downloaded from the service unit to the image buyer upon the first registration in the service. The evaluation, enhancing and simulation functions are operated from the buyer's computer over the network on the selected file residing in the publisher's repository.

The preferred method of operation described in this invention for the direct purchase of high-resolution images by an image buyer from a specific image publisher comprises: accessing by the buyer the system service unit and searching for the required image by defining desired attributes. Upon location by the service of the attributes in its attributes database, a thumbnail is presented to the image buyer in the service's web-site. A multitude of such thumbnails are pre registered by one or more image publishers in the service with their respective attributes. At the request of the image buyer, a temporary peer-to-peer network connection is established between the buyer and image publisher, and the buyer gets direct access to the low-resolution image file as well as to selected parts of the high-resolution image file. The buyer has now the opportunity to verify, enhance and embed in a page layout, the low-resolution image of each selected thumbnail, quality check selected parts of each respective high- resolution image file and create simulations. Upon satisfactory termination of the enhancement and quality checks the buyer can purchase the high-resolution image, by negotiating directly with the image supplier the terms of purchase and mode of payment. The payment is done via the billing system of the system's service unit, which can split the payment between eligible parties. The high-resolution image file is consequently transferred from the supplier's repository to the buyer, by means of network downloading, physical transfer of a removable storage media or a transparency. The high-resolution image file is automatically rendered by the enhancement unit to be ready for print, based on the enhancement and quality factors performed at an earlier stage.

In another preferred embodiment the attribute database can be segmented according to known preference of buyers, such as saturated colors, skin tone or ultra high-resolution. These preference factors entail specific conversion of the low-resolution and high-resolution files representing the image.

In another preferred embodiment the invention an image publisher can be defined as an Exclusive Content Provider.

Certain tools described in this invention are applicable both in the preferred embodiments of the peer-to-peer system or in the prior-art image bank trading method.

The invention is herein described, by way of example only, with reference to the accompanying drawings, wherein:
Fig. 1 is a schematic drawing of a typical layout and inter-unit workflow of the Peer-to-Peer Service unit, Image Publisher unit and Graphic Arts buyer.
Fig. 2 is a schematic drawing of another embodiment of a typical layout and inter-unit workflow of the Peer-to-Peer Service unit and the Image Buyer as described in this invention.
Fig. 3 is a schematic drawing of another embodiment of a typical layout and inter-unit workflow of the Peer-to-Peer Service unit, Image Publisher unit and Graphic Arts buyer unit as described in this invention.
Fig. 4 is a schematic block-diagram of the Generic Simulation workflow as described in the second preferred embodiment of this invention.
Fig. 5 is a schematic block-diagram of the Precise Simulation workflow as described in the second preferred embodiment of this invention.
Fig. 6 is a schematic block-diagram of the operation via Web Services as described in the third preferred embodiment of this invention.

The arrangement described in WO2004/046982 is a distributed image bank, where Image Publishers (content providers) provide full size images (content) to Graphic Arts Buyers via an indexing system of the Peer-to-Peer Service. One of the innovative features in this solution is the ability of the Image Buyers to view an image in the same colors it would later be printed, provided the viewer's monitor is well calibrated for soft proofing. This feature is practically an Output Simulation function.

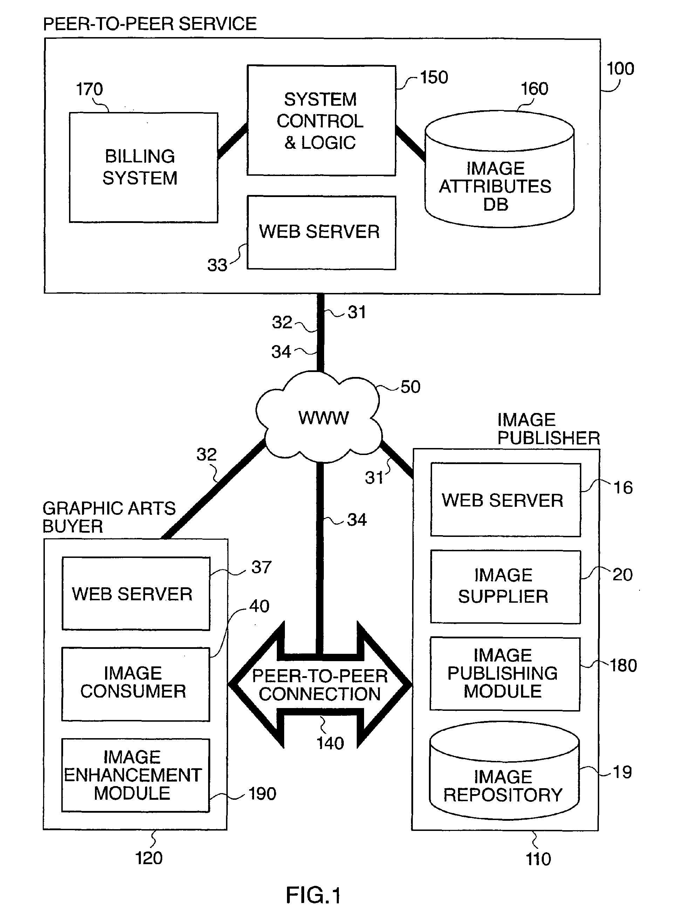

The key modules of the service, as described in WO2004/046982 and in Fig. 1, are:
◆ The Peer-to-Peer service 100 ― a hub type unit located on a web-server 33, connected to the Internet 50, having adequate bandwidth for up-loading and downloading metadata and Thumbnail images.
◆ Image Publishers 110 (for example a museum) incorporate Image Suppliers 20 (for example, the museum's different departments), an image repository 19 and additional software modules to be further explained later. The Image Publishers 110 owns rights in proprietary hi-resolution images, which are registered as Thumbnails by action link 31 and published in the Peer-to-Peer service 100.
◆ Graphic Arts Buyers 120 (for example, studios, ad-agencies, magazines) employ one or more Image Consumers 40 (for example designers) working for the same Buyer, equipped with additional software module to be further explained later. Graphic Arts Buyers 120 looking for stock images for their designs perform a search 32 for such images in the Peer-to-Peer service 100 web site. If, for example, Graphic Arts Buyer 120 finds a Thumbnail that meets her/his requirements, and which belongs to a certain Image Publisher 110, an option is secured to buy rights in the chosen image and the Peer-to-Peer service 100 establishes 34 an ad-hoc Peer-to-Peer network connection 140 between the Image Publisher 110 and the Graphic Arts Buyer 120. It assumed here that the ad-hoc network connection is physically feasible, the transmission quality is acceptable (including data transfer rate) and the security level is adequate. The chosen hi-resolution image is transferred via this connection to the Buyer, following Buyer's image quality verification of the low-res and partial hi-res image and a payment procedure.
◆ The communication means between Graphic Arts Buyers 120, Image Publishers 110 and the Peer-to-Peer service 100 can be other than the Internet, for example Intranet, and combinations of Internet, Intranet, phone and mail services for delivery of CDs or film, including, for example, the high-resolution file of the image.
◆ Image Publishing Module 180 of Fig. 1, is primarily responsible for the task of exporting the low-resolution and high-resolution image (or specific parts thereof) from the Publisher's repository 19 to the Buyer 120, using the ad-hoc peer-to peer link 140, but offers several additional functions:
   - Scaling the image according to the Buyer's parameters, by known-in-the-graphics-arts methods.
   - Cropping, by known-in-the- graphics-arts methods, the high-resolution image and transferring over the network connection 140 only the relevant parts of the image.
   - Embossing or removing, by known in the art methods, an "Electronic Signature" or Watermark" to the images for copyright protection purposes.
   - Compressing the original file using known-in-the-art methods for loss-less compression.
   - Embedding metadata into the image file.
◆ The Image Enhancement Module 190, is primarily responsible, in this embodiment, for the task of importing the low-resolution and high-resolution image (or specific parts thereof) from the Image Publishing Module 180, using the ad-hoc peer-to peer link 140, but offers several additional functions:
   a) Enhancement and preparation of the image, for inclusion in the designed page; this is performed on the low-resolution representation of the image.
      This function includes, for example, known in the art tools for scaling and cropping the image. The same functions will be subsequently carried out, as further explained later, by the Publishing unit 180 on the hi-resolution image file, before delivery to the Consumer.
      The enhancement function includes other known in the art tools such as, for example, toning, sharpening, color correction and color conversion. These tools help to prepare the image printing on a specific printer. The resulting enhancement details of the low-resolution image will, in case the transaction is completed, be automatically performed, as further explained later, by the Image Enhancement unit 190 on the delivered high-resolution file.
   b) Embedding the elected and enhanced low-resolution image/s in the layout of the job at hand without having the ready to print hi-res image. The resulting embedding details of the low-resolution image/s will, in case the transaction is completed, be automatically performed (by the Image Enhancement unit 190) on the delivered raw high-resolution file/s, e.g. toning and color conversion. A similar DTI Workflow automatic feature was published on the Creo website
      <http://www.creo.com/global/products/scanning_systems/color_scanners/scanner_a pplications_accessories/oXYgen_digital_transparency/default.htm >
   c) Image quality verification, an essential phase in the entire workflow. The verification phase consists of 2 main operations:
      ■ Maximum details: viewing high-resolution chosen parts of the image.
      ■ Output simulation: viewing the image as if processed on the target output device (e.g. proofer, printer).

As described in WO2004/046982, a software package titled Image Enhancing Module 190 (Fig. 1) is required (at the Image Buyer's 120 computer) to perform the Output Simulation. Output Simulation is a method, which displays an image on a calibrated screen showing its color as if printed on a specified output device. Since the Image Buyer is using a web browser to perform the complete process of searching, purchasing and downloading an image, adding a special module just for the sake of viewing an image, is cumbersome and might discourage users to adopt such a system.

This improved embodiment of the Peer-to-Peer service invention describes a novel method to perform a complete Output Simulation without adding any additional software packages to the Image Buyer. By eliminating the need to download the Image Enhancement Module 190 (of Fig. 1) we gain the following:
● Image Buyers do not need to download any additional software.
● There is no need for Image Buyers to learn to operate a new software tool.
● No browser compatibility issues need to be resolved
● There is no need to maintain the logistics of software updates for such a tool.

In order to perform an Output Simulation, a system should have at least 3 color profiles (for all practical purposes, a color profile is an ICC profile):
1. Input profile, which describes the color properties of the input device, by which the image was captured.
2. Output profile, which describes the color properties of the output device, on which the image is going to be printed.
3. Display profile, which describes the color properties of the monitor device where the simulation is taking place.

In some cases, another profile can be added to the chain, for example, a profile that is used to remove cast (color on top of neutral background) that precedes the input profile in the chain.

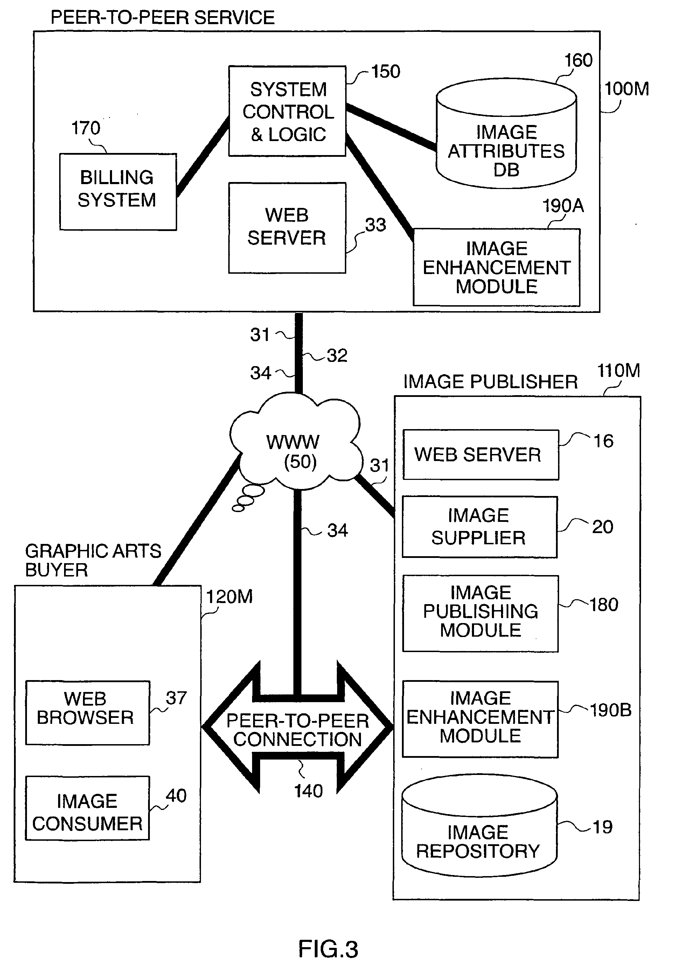

Figures 2 and 3 are relevant to the following description of the invention.

Figure 2 represents a typical Graphic Arts Buyer 120M according to this embodiment, having only a known-in-the-art Web Browser 37 available for in-house Image Consumers 40.

In Figure 3 an Image-Publishing Module 180 is available at the Image Publisher's site 110M. It would be ideal to assign the task of Output Simulation to this module. However, in many cases, the Buyer's Output Profile and moreover the Display Profile are not available to the Image Publisher 110M. Therefore, two solutions are proposed, as further detailed.

We distinguish between two types of Output Simulation known in the art procedures:
1. A generic (or approximated) simulation, where both the Output and Display Profiles in use are of a generic type. For example: for Display Profile we can use the RGB working space, and for Output Profile we can use SWOP, a generic type profile for a wide range of devices.
2. A precise simulation, where we require the Buyer's 120M specific Display Profile and the Output Profile, on which the image is going to be printed.

### A generic (or approximated) simulation

Referring to fig. 3, each Image Publisher 110M has an Image-Enhancement module 190B, including some generic profiles, as described above. This Image-Enhancement module 190B is downloaded to the Image Publisher 110M upon registration to the service 100M. As explained, the Image-Publishing module 180 extracts, upon request from the Buyer 120M, a relevant partial image from the hi-resolution image stored in the Image Publisher's Image Repository 19. The actual Output Simulation will be performed in the Image-Enhancement module 190B and the image, to be subsequently viewed by the Buyer, is saved as a temporary RGB file, using RGB working space. It is then downloaded "as is" by the buyer's browser for display and evaluation.

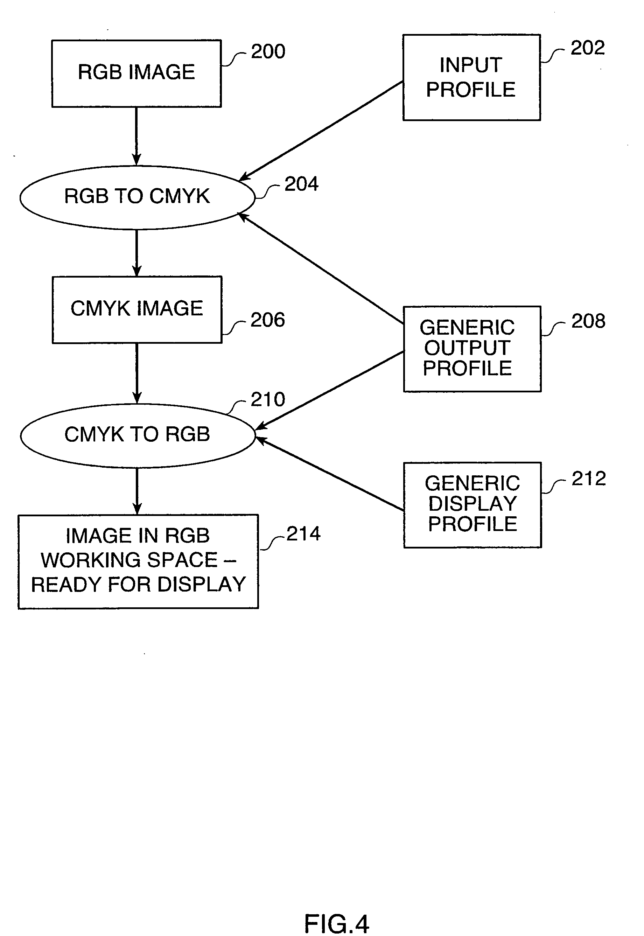

The operational sequence of the simulation is illustrated in Figure 4:
A color transformation 204 of the type RGB to CMYK, as known in the art, is performed on a selected image 200, which is initially stored in RGB color space, using the input profile 202 of this image, if available (otherwise, a default RGB working space input profile is used) and a generic output profile 208. The result of this transformation is an image in CMYK color space 206. Then, another color transformation of the type CMYK to RGB 210 is performed on the temporary image in CMYK color space 206, using the generic output profile 208 and generic display profile 212. The result of this transformation is an image in RGB Working Space 214, which is ready for display.

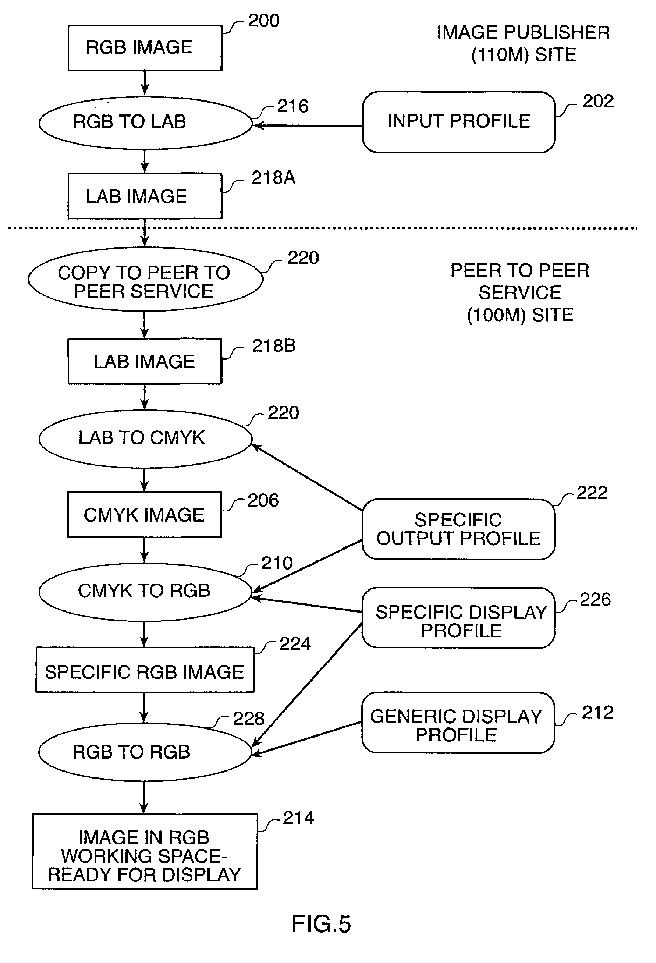

### Precise Simulation, as described in Figure 5

Each image buyer, who wishes to have a precise simulation, will upload (at setup time or at any other time either at his/her initiative or per the system suggestion) the required profiles (display and output) to the Peer-to-Peer Service 100M. When the Output Simulation takes place, the process is divided into 2 parts:

### Part 1, at the Image Publisher's site 110M (of Fig. 3):

a. The Image-Publishing module 180 extracts the relevant partial image to be displayed, as requested by the Buyer 120M, from the hi-resolution image stored in the Image Repository 19.
b. Then, the following color sequence is performed by the Image Enhancement module 190B: A color transformation of the type RGB to Lab 216 is performed on the image, represented originally in RGB color space 200, using the input profile 202 of this image, if exists, or alternatively an RGB working space profile.
c. The result of this transformation is an image in Lab color space 218A. Note that we may use other intermediate color space (either RGB Working Space or PCS) for this temporary image.

### Part 2, at the Peer-to-Peer Service 100M, using the Image Enhancement module 190A.

In this case, this unit has access to the relevant Buyer's output 222 and display 226 profiles that were uploaded beforehand. It then performs the rest of the Output Simulation process, where the temporary file 218A (in Lab color space) is the input of this process, and the output is an RGB file (in an RGB working space) 214:
a. First, the image in Lab color space 218A is copied from the image publisher's site 110M to the Peer-to-Peer Service 100M server, and is now notated as 218B.
b. A color transformation of the type Lab to CMYK 220 is performed on the image 218B, using the Buyer's output profile 222. The result of this transformation is an image in CMYK color space 206.
c. Then, a color transformation of the type CMYK to RGB 210 is performed on the image 206, using the Buyer's output profile 222 and display profile 226. The result of this transformation is an image in RGB color space 224.
d. Finally, a color transformation of the type RGB to RGB 228 is performed on the image 224, using the display profile 224 and a generic RGB working space profile 212. The result of this transformation is an image in RGB working space 214, which can be down loaded by the Buyer's browser 37 for display and evaluation purposes.

It should be noted that the above precise method is one basic example of how to perform such a simulation. Another method would be to use RGB working space instead of Lab and use another profile between the input and output profiles.

### Another option for Output Simulation

Based on the procedures explained above, a third option is available:
a. The Buyer 120M, upon his request to evaluate a specific image, is automatically offered a Generic Simulation.
b. If there is a need for a better simulation, the Buyer uploads in real time the relevant output and display Profiles to the Image Publisher's site (110M), where,
c. The Precise Simulation is performed in module 190B, much the same as explained in Fig 5.

### Innovation and differentiation of the embodiment described in this invention:

- Sophisticated color matching does not require any additional software at the browser side ob the Buyer, and thus is seamless to the user.
- The Output Simulation procedure is executed in one (remote) location, or split between 2 processing units in different (remote) locations, without losing any color accuracy.
- In the Generic and Precise methods, the effective download time includes only the partial screen image (no extra time to upload or download any special color profiles).
- There is no need to perform any sophisticated color calibration to achieve a good simulation.
- During the setup procedure, there is an option to define more parameters, which characterize the Buyer's preferences, e.g. saturation of skin tone.
- The system support is easier and cheaper, since no software updates are required at the Buyer's side (and these are most of the customers served by the Service 100M).

**Another preferred embodiment - Exclusive Content Provider -** useful for the embodiments described in this invention as well as that described by WO2004/046982:

Each Image Publisher 110 can choose to become an Exclusive Content Provider (ECP) within the peer-to-peer service 100. By doing so, the Image Publisher achieves the following:
1. Maintains the brand identity of her/his offering.
2. Limits image buyers to search only within her/his offering.
3. Has ability to segregate users according to levels of permission.
In addition, an Image Publisher can use the Peer-to-Peer Service as a back-end for her/his own website.

### Detailed Description:

### Brand identity:

For each domain of an ECP, we define a sub-portal within the Peer-to-Peer Service 100. This sub-portal contains the following components:
- The Company's specially designed banner
- The Company's profile
- The Company's portfolio and a copyright statement
- An option to rearrange the entire look & feel of this sub-portal

### Closed set:

In order to create a closed set of images within the Peer-to-Peer Service 100, we attach each image with an attribute - "My Image Publisher". When an Image Buyer 120 chooses to enter into the domain of an ECP, the search attribute of "My Image Publisher" is assigned with a constant value, which matches the specific Image Publisher. Only when the Image Buyer explicitly chooses to exit this mode, the constant search attribute is reset.

### Different permission scheme:

In order to create a "permission scheme", each Image Publisher is assigned with a list of Image Buyers, each with a different permission scheme for the content offered by the Image Publisher. For every operation on this content (e.g. download) the current user profile is matched against the above list so that only a user with the appropriate permission can perform the operation.

### Independent website:

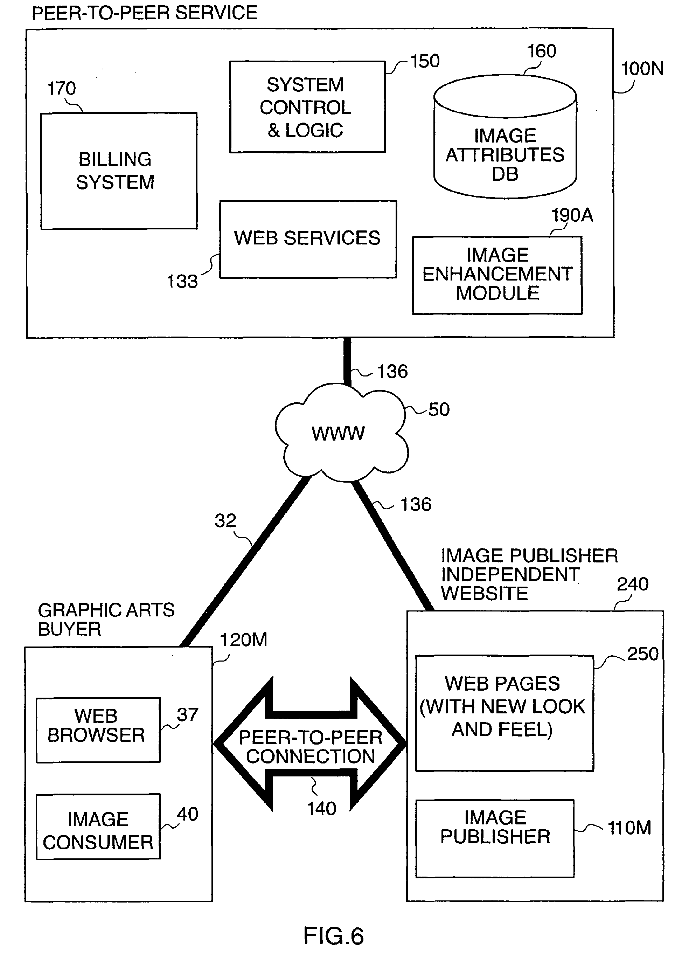

The Peer-to-Peer Service 100 is exporting a web API called Web Services. Almost every operation performed by the Peer-to-Peer Service can be called from a different web application on the following terms:
1. The web application uses the public IP port 80.
2. It has permission to perform this specific operation (in some cases we use secured protocol such as SSL)
An example of an operation via Web Services 133 is illustrated in Figure 6 as applied to the embodiment described in this invention. The Graphic Arts Buyer 120M browses the Image Publisher Independent Website 240. Image Publisher 110M is an integral part of Image Publisher Independent Website 240. The Web pages 250, part of Website 240, have a particular "look & feel" and include a suitable search page. When a search command (with search parameters) is sent to the Image Publisher 110 A, the later, simply, forwards 136 it to the Web Services 133 unit in the Peer-to-Peer Service 100M, and gets 136 via Web Services 133 the search results page back.

### Innovation and Differentiation

1. Other Image Portals, such as Alamy from the UK, provide tools to view content of a specific Image Publisher. However, their tool is simply a filtered search results page, and does not provide an explicit brand differentiation or offer permission level management.
2. None of the current stock images services in the industry provide tools enabling a back-end operation for another website, namely, the Image Publisher's Independent Website 240.

The alternative operational workflow of the Peer-to-Peer system, as described in WO2004/046982, which is particularly useful where the direct ad-hoc peer- to- peer link 140 is impractical, can be used for the improved preferred embodiments of this invention.

The technologies and methods described in the preferred modes of this invention are known in the art of Graphic arts, Pre-Press and data communication over the Internet. Wherever specific technologies were employed, examples for such technologies were quoted.

## Claims

1. A distributed image acquisition system comprising:
a) at least one image publishing system adapted to communicate with at least one image buyer terminal, wherein said image publishing system comprises at least one of a repository for high-resolution images, an image publishing module;
b) at least one image enhancement unit , and
c) a system service unit adapted to communicate with at least one image buyer terminal and said at least one image publishing system, comprising at least one of an image attributes database, a search module for searching said at least one image attributes database.

2. The system according to claim 1, wherein said image publishing module comprises at least one of:
a) an image metadata publishing module;
b) a low-resolution and high-resolution image file exporting module;
c) an image price-negotiating module;
d) combinations thereof.

3. The system according to claim 2, wherein said metadata publishing module comprises a module for extracting metadata from high-resolution image files stored in said at least one repository.

4. The system according to claim 2, wherein said low and high-resolution image exporting module comprises at least one of:
a) means for exporting a low-resolution representation of a thumbnail selected by a user of said image buyer terminal;
b) means for embossing or removing an electronic signature on/from said low-resolution image file;
c) means for exporting the high -resolution representation of said low-resolution image file, and
d) means for compressing said high-resolution image file.

5. The system according to claim 1, wherein said image publishing system comprises a first module of said image enhancement unit.

6. The system according to claim 5, wherein said first image enhancement module comprises at least one of:
a) means for extracting a low-resolution image file from said high-resolution image file stored in said at least one repository;
b) means for scaling and cropping said low-resolution image according to instructions received from said image buyer terminal;
c) means for enhancing said low-resolution representation comprising at least one of toning, sharpening and color correction according to instructions received from said image buyer terminal;
d) means for embedding the selected and enhanced low-resolution image in a page layout according to instructions received from said image buyer terminal;
e) means for obtaining from said high-resolution image file an image buyer defined partial image in maximum resolution;
f) means for generating a simulation of said partial image in maximum resolution;
g) means for negotiating the price of the high-resolution image, said price defined by said publisher;
h) means for automatically performing the operations in (b) to (d) and (f) on said exported high-resolution file to render the file ready for print,
k) combinations thereof.

7. The system according to claim 2, wherein said image price negotiating module, comprises at least one of pricing templates, a module for defining a pricing policy, and combinations thereof.

8. The system according to claim 5, wherein said image publishing module and said first image enhancement module are provided by said system service unit to said image publishing system upon registering with said service unit.

9. The system according to claim 1, wherein said image attributes comprises at least one of thumbnails representing said high-resolution images, a description of said high-resolution images, and combinations thereof.

10. The system according to claim 9, wherein said image description comprises at least one of said image publishing system's identity, the actual location of said high-resolution images in said repository, physical attributes of said images, content category to which said images belongs, textual description of the content, pricing tables, image grading and preference segmentation information and combinations thereof.

11. The system according to claim 1, wherein said system service unit includes a repository for high and low-resolution images.

12. The system according to claim 1, wherein said service unit comprises a second module of said image enhancement unit.

13. The system according to claim 1, wherein said service unit comprises means for Internet Web Services.

14. A method of locating and acquiring high-resolution images directly from the publisher of said images, the method comprising:
a) accessing a system service unit through a network connection;
b) searching image attributes in said system service's data base and selecting desired thumbnails;
c) Simulating, enhancing and verifying the quality of the high-resolution files and their low-resolution representation corresponding to said selected thumbnail by controlled remote accessing of said image publisher's computer via a network connection;
d) purchasing from said system service unit and paying for a permission to download said selected high-resolution images;
e) acquiring from said publisher's image repository, said selected image in high-resolution format directly to a buyer's computer, and
f) automatically rendering said selected image in high-resolution format ready for print by applying parameters of step c.

15. The method of claim 14, wherein said simulating, enhancing and verifying step comprises at least one of:
a) evaluating the low-resolution representation of a selected thumbnail;
b) cropping and scaling said low-resolution representation;
c) enhancing said low-resolution representation including at least one of toning, sharpening, color correction and color conversion;
d) embedding the selected and enhanced low-resolution image in a page layout;
e) obtaining from said high-resolution image a defined partial image in maximum resolution, and
f) simulating said partial image on said buyer's calibrated computer screen, wherein said simulation on said buyer's calibrated computer screen is one of generic simulation or precise simulation.

16. The method of claim 14, wherein said simulation is facilitated by an enhancement unit located partly at said image publisher and partly at said service unit.

17. The method of claim 14, wherein said purchasing step comprises at least one of
a) negotiating a price, of the high-resolution image by said buyer, by accessing said publisher's price negotiating module;
b) paying the negotiated price; and
c) combinations thereof.

18. The method of claim 14, wherein said acquiring comprises at least one of:
a) downloading said selected high-resolution image via said network connection;
b) receiving a removable storage device including said selected high-resolution image, and
c) receiving a transparency representing said selected high-resolution image.

19. The method of claim 14, wherein said operations of step c are executed via a temporary storage location in said system service,

20. The system according to claim 1, wherein said image publishing system is one of Exclusive Content Provider and non-Exclusive Content Provider.
